# EUROPEAN PATENT APPLICATION

(11) **EP 1 626 220 A1**
(43) Date of publication of application: **15.02.2006**
(21) Application number: 04405505.1
(22) Date of filing: 11.08.2004
(51) Int. Cl.: F16L 55/18, F16L 55/165

(54) **Method and system for lining a pipe with a heat-curable lining**

(71) Applicant: Mitchell, David Campbell, CH-1255 Veyrier Geneva (CH)
(72) Inventor: Mitchell, David Campbell, CH-1255 Veyrier Geneva (CH)
(74) Representative: Cronin, Brian Harold John

(57) **Abstract**

A pipe (10) is lined with a heat-curable thermosetting pipe liner (20) that thermosets at a temperatures from 110°C-150°C by applying the pipe liner against the inside surface of the pipe and curing the liner using a segment-by-segment curing unit (40) that can be moved along the pipe and is operable to cure segments of the liner (20) one at a time. This curing unit (40) comprises an inflatable enclosure (50), and a heating coil (62) or an inlet (72) for hot pressurized air. The enclosure (50) is inflatable to press its outer surface coated with PTFE against the inside of the pipe liner (20). Hot air in the enclosure (50) heats the pipe liner (20) via the inflated enclosure. The enclosure (50) is deflatable to allow displacement of the curing unit (40) along the inside of the pipe (10). The pipe lining operation is effected by curing one section or successive sections of the pipe liner (20) by placing the curing unit (40) along the pipe at a location to be cured, inflating the enclosure (50) and applying heat whereby the inflated enclosure (50) presses against the annular segment of the liner (20) which is heated to bring the liner (20) to its thermosetting temperature and cure the liner, deflating the enclosure (50) to allow the cured liner segment to be cooled by fluid in the pipe and to harden, displacing the curing unit (40) along the pipe (10), and repeating the operation as necessary.

## Description

### Field of the Invention

This invention relates to a method and system for lining pipes, as well as a mobile curing unit of the system. The invention pertains in particular to patching or lining defective pipelines using a heat-curable thermosetting lining.

### Background of the Invention

It is well known that there are pipelines of different sizes buried underground in most countries and these pipelines deteriorate with age because of wear, ground movement, erosion and other causes. Often it is necessary to excavate the ground to mend or replace defective piping but other lining systems have been developed whereby a sheath or inner lining is inserted inside the old pipe. Several different systems are currently in use and one makes use of a soft lining that contains thermo-setting materials that are heated up by the use of hot water to achieve the curing of the resins.

With the soft lining method a liner is drawn down the pipe to be lined and is fitted inside the pipe, effectively forming an inner wall at or adjacent to the inner surface of the pipe. This form of liner may be introduced into the pipeline via a manhole, whereby holes do not, necessarily, have to be dug at the location where the problems exist. Such linings may be relatively soft and flexible and composed of a type of felt which is impregnated with a resin which can be set hard, or cured, by heat. In such applications, the liner is drawn into place down the pipe and is then forced, by water or air pressure against the wall of the pipe to be lined. The water is then heated and recycled until the temperature reaches about eighty degrees. The disadvantages of this system are that the relatively low curing temperatures give linings that are not as effective as linings cured at higher temperatures and the shelf life is limited, as the resins can set hard at ambient temperatures and render the lining useless, before it is ready for insertion into the piping. Also the resins can set hard during transport, especially when being sent to tropical areas. Moreover, heating of the water in the pipe requires much energy, especially for larger diameter pipes and pipes running under water.

EP-A-0 551 790 discloses a method and apparatus for curing a heat-curable pipe liner wherein the liner is impregnated with magnetizable particles and the apparatus comprises a unit movable along and within the pipe, the unit generating an alternating magnetic field to heat and cure successive annular segments of the liner. However, difficulties in implementation prevented commercialization despite attempts to improve the process such as by including catalysts in the resins.

Other proposals included: using a curing device such as an ultrasonic cylinder or ultraviolet source that passes along the pipe; curing the installed liner by delivering steam or hot air along the pipe; and installing the liner by eversion (turning it inside out as it goes along) and applying e.g. ultrasonic energy to the everting face of the liner as it is being installed.

Despite all efforts, and despite its disadvantages listed above, the curing of liner resins using hot water, which implies using resins that cure at about 80°C, remains the industry standard.

### Summary of the Invention

An aim of the present invention is to provide a method and system for the lining of existing pipelines by the use of plastic resins that have a higher curing temperature at which they thermo-set, thus providing a harder lining and having a longer and safer shelf-life with less risk of the resins curing prematurely during transport or storage.

According to one main aspect, the invention provides a method of lining a pipe, which comprises firstly placing inside the pipe a heat-curable thermosetting pipe liner that thermosets at a temperature above 100°C, in particular from 110-160°C, and applying the pipe liner against the inside surface of the pipe, typically by the application of pressure of water or other fluid in the pipe. At least one annular segment of the pipe liner is then cured by a curing operation using a segment-by-segment liner curing unit that is displaceable along the inside of the lined pipe and is arranged for curing the pipe liner of a long pipe one annular segment at a time by placing the curing unit along the lined pipe at a location corresponding to an annular segment of the pipe liner to be cured, and as needed displacing the curing unit along the lined pipe to different locations corresponding to different annular segments of the pipe liner to be cured.

The curing unit used in the inventive method and system comprises an inflatable/deflatable enclosure provided with an inflatable sleeve that can be inflated by a pressurized fluid in the enclosure so as to press against the inside of an annular segment of the pipe liner to be cured, and when deflated fits loose enough inside the pipe to allow the unit to be displaced along the inside of the pipe, the enclosure being re-inflatable and deflatable as needed. Means are provided for heating an annular segment of the liner that is pressed by the pressurized fluid acting on the inflated sleeve, the heating means being arranged to generate heat in the enclosure or to deliver hot pressurized fluid to the enclosure.

The curing operation comprises placing the curing unit at a location along the pipe where an annular segment of the liner is to be cured and inflating the enclosure with pressurized air or another fluid. The annular segment of the pipe liner is heated by generating heat in the enclosure or by delivering hot pressurized air or another hot pressurized fluid like steam to the enclosure. The inflated sleeve thus presses against the annular segment of the liner that is heated to its thermosetting temperature to cure the liner segment. After curing, the enclosure is deflated to allow the cured liner segment to be cooled by water or other fluid in the pipe and thus to harden. The curing unit can then be displaced along the pipe for repeating the curing operation as necessary on successive segments.

The invention also concerns a corresponding system for lining a pipe and a mobile curing unit of a pipe lining system.

The method and system of the invention enable the lining of pipes with thermosetting liners of higher thermosetting temperatures than those used conventionally, with the advantages outlined above. Additionally, the inventive method and system allow progressive lining of long pipes at a steady and relatively high rate of, say, 12-15m per hour for a pipe of 1 m diameter, which is particularly advantageous for "short run" linings. It also offers great flexibility for longer linings that can be carried out over several working days with stoppages at any convenient times after lining given lengths, which is not possible with the conventional systems.

### Brief Description of Drawings

This invention will be described by way of example with reference to the accompanying schematic and not-to-scale drawings, in which:
Fig. 1 is a half axial cross-section of one embodiment of a curing unit installed in a pipe being lined, intended for medium and larger diameter pipes;
Fig. 2 is an axial cross-section of another embodiment of a curing unit installed in a pipe being lined, intended for small diameter pipes; and
Fig. 3 is an axial cross-section of yet another embodiment of a curing unit installed in a pipe being lined, intended for small diameter pipes especially with patches to be installed at relatively short distances from the surface unit.

### Detailed Description

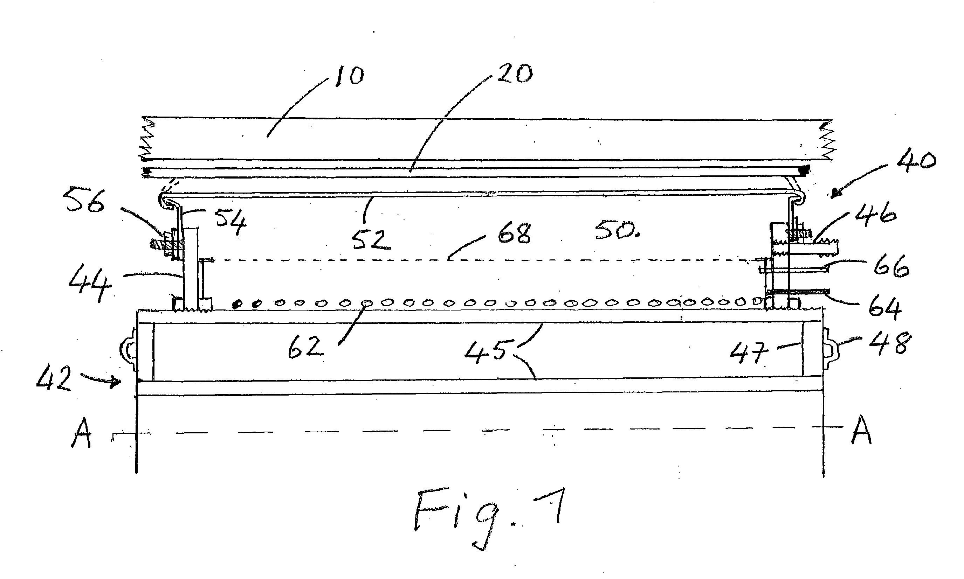

Fig. 1 shows a first system according to the invention for lining segments of an underground (or under water) pipe 10 with a heat-curable thermosetting pipe liner 20. Only the upper part of the pipe 10 and curing unit 40 are shown, the bottom half being a mirror image about the pipe axis A-A. The components are not shown to scale, and the liner 20 is shown artificially spaced apart from the inside of the pipe 10.

A major characteristic of this invention is that the liners 20, usually felt-based, are impregnated with resins that thermo-set at temperatures above 100°C and usually of the order of 110-160°C, typically about 120°C. The liner 20 can incorporate standard felts, and the resin is for example a mixture of 68-72wt% of unsaturated polyester resin mixed with 26-30wt% of 4-vinyl toluene. Such resins have a shelf life of many months due to the fact that they remain totally stable at ambient and "just above " ambient temperatures up to about 70°C. Heating above this temperature leads to exothermic polymerization; however, the thermosetting temperature is about 120°C

The heat-curable pipe liner 20 is installed inside the pipe 10 by any usual means, by pulling the liner 20 through the pipe or by everting it using water pressure, and is applied against the inside surface of the pipe 10 by the application of pressure via water or other fluid in the pipe 10, as is usual, using conventional surface equipment listed below.

A mobile curing unit 40 is displaceable along the inside of the lined pipe 10 from one end to the other by a rope-pulling system. The mobile curing unit 40 comprises a cylindrical metal core 42 carrying an inflatable enclosure 50, and a heating unit inside the inflatable enclosure constituted by a heating coil 62 carried by the core 42. In this example, the core 42 is composed of a double-walled metal tube 45 closed at each end by rings 47 and leaving a cylindrical space in the middle though which water in the tube 10 can pass. The end rings 47 are fastened by external locking nuts and gasket, to ensure an airtight fit. The end rings 47 carry lugs 48 for the attachment of cords connected to winches of the surface equipment, by means of which the unit 40 can be pulled to-and-fro along the tube 1.

The electric heating coils 62 for single phase or three phase current (depending on the power requirements) are wound around the metal cylinder core 42. A cylindrical grid 68 is fastened over the heating coils 62, at a small distance, to prevent the material of an inflatable sleeve 52 of the enclosure 50 from having direct contact with the heating coils 62. This grid 68, and the heating coils 62 will be fixed in place prior to the fastening of ring-shaped end plates 44. The distance of the grid 68 to the pipe liner 20 will be dependent upon the pipe diameter but will be the minimum necessary, to reduce the volume of air to be heated.

The ends of the inflatable enclosure 50 are defined by the circular metal plates 44 fitted on the outside of tube 45 towards the ends of the core 42. One end plate 44 also carries electrical connections 64 and thermostats 66 that are connected by air-tight connections and that lead to the surface unit.

The end plates 44 carry an inflatable sleeve 52 of flexible-extensible material that is firmly connected by stitching to turned-over circular reinforced end pieces 54 of the same material. These reinforced end pieces 54 are clamped to the plates 44 by a series of rings and nuts 56 and a gasket to ensure a fairly airtight fit. The stitching will contain a jointing substance to improve airtightness. The outer surface of tube 45, the end plates 44 and the sleeve 52 with its turned-over end pieces 54 thus form a generally cylindrical enclosure 50. By the described manner of fitting the sleeve 52, different external diameters can be provided with the same hardware.

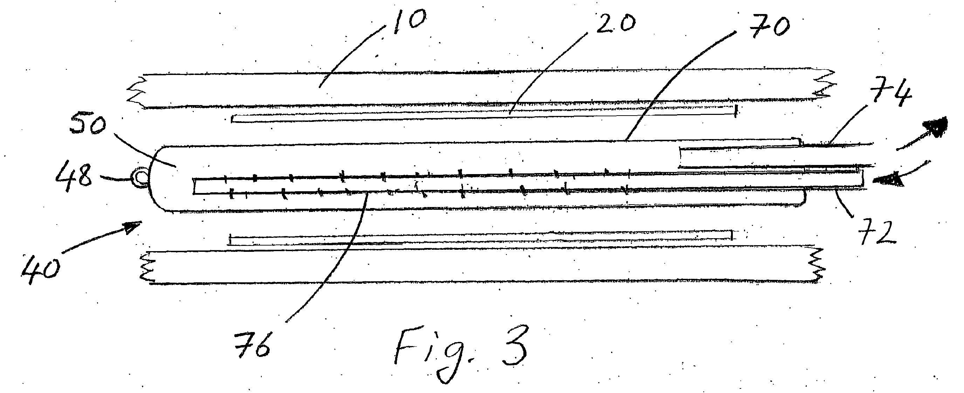

Alternatively, and by use of a more flexible and more easily distensible material, the inflatable sleeve 52 may consist simply of a cylinder of distendable material attached at right angles to the metal end plates 44, as described below for Fig. 3. This would leave less space for manoeuvring the units 40 in the pipe 10 and might be suitable only in a limited number of applications.

The curing unit 40 is of a convenient length for the pipe 10 to be lined, usually of the order of 1 meter long (and rarely exceeding 2 or 3 meters long for a pipe of 1 meter diameter) so the chamber 50 will have a volume comparable to that of household ovens. Since the maximum operating temperature (up to about 150°-160°C) is also comparable to the temperatures in household ovens, it will be possible to make use of readily available heating coils or other heating devices.

The end plate 44 that carries the electrical connections 64 and thermostats 66 also has openings 46 connected by an air-tight connection to an air tube leading to a compressor in the surface unit, by means of which the enclosure 50 can be inflated by supplying compressed air from the surface unit, to apply the sleeve 52 against the inside of the pipe liner 20.

As illustrated in Fig. 1, the sleeve 52 is in its deflated state leaving a gap of a few centimeters on each side between the sleeve 52 and the inside of the liner 20, enough to allow the unit 40 to be inserted into and slid along the tube 10. A clearance of only about 3cm from the inner surface of the liner 20 should be adequate in most cases, but this will depend upon the evenness of the pipe 10 which is to be lined. The overall specific gravity of the unit 40 when deflated should approximate that of water, to facilitate the introduction of the unit 40 through the water in the pipe 10.

The sleeve 52 and its turned-over end-pieces 54 can be made of heat-resistant plastics material such as polyurethane and the sleeve 52 is preferably coated on its outside surface that contacts the liner 20 with a low-friction plastics material that does not melt at the temperatures being employed, such as PTFE, to avoid sticking of the liner 20 to the sleeve 52 during the heating cycle.

When the unit 40 is in place and ready for the heating cycle, the enclosure 50 will be pressurized, to displace the surrounding water in the pipe 10 and to press firmly against the liner 20. By supplying air under pressure from the ground unit via the openings 46, the compressed air inflates the sleeve 52 which comes to be applied with pressure against the liner 20, as indicated by dotted lines in Fig. 1. The pipe 10 typically contains pressurized water, so the enclosure 50 is inflated with air at a pressure exceeding that of water in the pipe 10, in order to gradually expel the water in the space between the sleeve 52 and liner 20 as the sleeve 52 expands. The pressure of the pressurized air/gas supplied to enclosure 50 must be sufficient to firmly press the inflated sleeve 52 against a segment of the liner 20. Also, the pressure of the water in the pipe 10 will compensate for most of the air pressure, reducing the strain on the sleeve 52.

After the sleeve 52 has been inflated, or while it is being inflated, current is supplied to the heating coil 62 to heat the pipe liner 20 via the inflated sleeve 52, by heating the air in the inflated enclosure 50 up to a sufficient temperature. The conditions of heating the lining 20 under pressure are maintained for a sufficient time (usually several minutes) to thermoset the liner 20.

The time of the heating cycle will depend on several factors, including the power supply, the pipe diameter, the length of the curing unit 40, the volume of air in the pressurized enclosure 50, the temperature of the air in the enclosure 50, the thickness of the liner 20 and of the polyurethane/PTFE or other material of the sleeve 52 and the heat transmission time. However, only a relatively short time should be necessary, usually a maximum of a few minutes.

After curing, the enclosure 50 is deflated as illustrated in Fig. 1, the water in the pipe 10 penetrates in the space formed by retraction of the sleeve 52 and this serves to rapidly cool and harden the thermoset liner 20, by a heat sink effect.

The system is thus operable for curing one annular segment of the pipe liner 20 or several successive segments by placing the curing unit 40 along the pipe 10 at a location to be cured and inflating the enclosure 50 to make the sleeve 52 press against the annular segment of the liner 20 to be cured. This drives out the water from between the pipe liner 20 and the sleeve 52 until the latter is firmly pressed against the inside of liner 20. Heat is then generated by coil 62 to bring the heat-curable liner 20 to its curing temperature, and the heating under pressure is maintained for a sufficient time to thermoset the liner 20. Thereafter the enclosure 50 is deflated, allowing water in the pipe to contact the thermoset liner 20 to cool and harden it by a heat sink effect. The curing unit 40 can then be pulled along the pipe 10, by means of cords attached to lugs 48 and winches at the surface station, the curing operation repeated as necessary at successive annular locations, and at the end of operations the curing unit can be removed from the pipe 10.

The curing unit can carry a remote-controlled TV camera for inspecting the pipe 10 and the liner 20 before and after curing. After curing a liner segment at a given location along the pipe 10, the curing unit 40 is displaced and the treated segment inspected by the remote-controlled TV unit. If the lining is satisfactory, the unit will be moved to the next segment to be cured, otherwise a further curing operation is carried out on the same liner segment if necessary. As the resin is thermo-setting, this second treatment may be carried out by pulling the unit 40 back to its former position and repeating the treatment.

It should be noted that, in addition to the heat applied by the heating coil 62 on the liner's resin, there will be an exothermic reaction in the resin, as it cures, and the combination of these heating effects must be absorbed and removed from the resin to ensure that the liner 20 sets hard against the inner wall of the pipe 10. The cold water under pressure in the pipe 10 will act as a heat sink to achieve the desired result.

The configurations of the "down the hole" units may be modified when the pipes 10 to be lined are uneven or when the access is difficult, from the surface by means of equipment in a surface unit. The above-ground unit containing all of the usual equipment will be mounted on a small van and will for example include: an air compressor/pump and pressure gauge; an electrical generator (which can be quite small given the small energy requirements of the heating unit); a temperature gauge; winches and cords for drawing the unit 40 into place and recovering it when the operation is completed; the necessary equipment for installing the liner 20 by a chosen method which can be conventional such as pulling a squashed tubular liner through the tube or installing it by eversion under water pressure; TV camera controls, etc. There is no need for a surface heater unit unless hot air has to be supplied to the enclosure 50, as described below in connection with Fig. 3.

For pipes that are difficult to access by virtue of sharp bends, the unit 40 to be introduced down the pipe 10 could be constructed as articulated sections that could pass around corners. Once in the pipe 10 , the sections could be pulled up tight together to form an interlocking cylindrical tube on which the inflatable enclosure 50 is mounted.

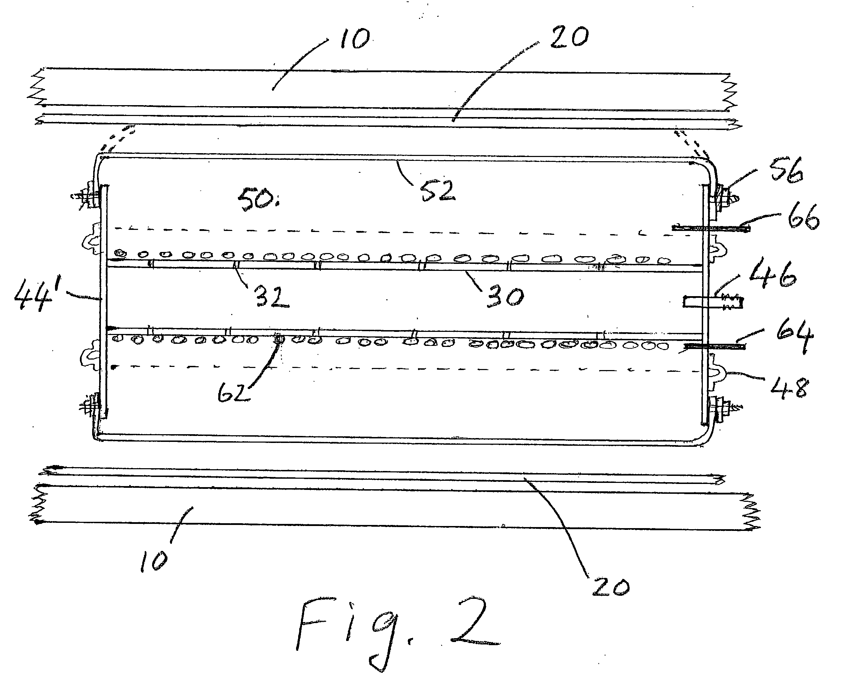

Fig. 2 illustrates another embodiment of a curing unit incorporating a heating unit. The same references designate the same elements and therefore it is not necessary to repeat a full description. In this embodiment, the curing unit 40 has a single central tube 30 carrying the windings 62. The air supply opening/tube 46 leads into this central tube 30 which has perforations 32 so the compressed air supplied via the central tube 30 passes though these perforations 32 and through the coil 62 where the air is heated as it enters the enclosure 50.

In this embodiment, the inflatable sleeve 52 is connected "directly" to end plates in the form of disks 44' on which lugs 48 for the attachment of cords are also carried.

Otherwise the construction and operating principle of this embodiment is the same as for the embodiment of Fig. 1.

Fig. 3 shows an alternative system principally for the lining of smaller diameter pipes 10, especially with patches to be installed at relatively short distances from the surface unit. This will be applicable especially for repairing pipe connections from houses to street mains.

In this embodiment, the inflatable/deflatable enclosure 50 is constituted by a tubular bag 70 into which hot pressurized air from a surface unit is introduced via a thermally insulated conduit 72, and is removed by an exhaust conduit 74 for recirculating the pressurized fluid from the enclosure 50 back to the surface unit.

The heating/curing unit 40 that is introduced inside the liner 20, down the pipe 10 to be mended, consists thus of a flexible bag 70 which contains a perforated tube 76 which passes along the length of the bag 70 and this tube 76 is connected to the surface unit by the thermally insulated, flexible gas tube 72. Hot air (or, less preferably, steam that can be superheated) is pumped down this tube 76 and returns to the surface unit through the exhaust tube 74 which is attached at the same end of the bag 70 as the inlet tube 72.

The heating of the gas in the surface unit may be achieved by electrical means or by the use of a gas combustion heater using, for example, propane or butane gas.

After the liner 20 has been everted into position by the use of pressurized cold water down the pipe 10 to be mended, the bag 70 containing the perforated tube 76 is drawn into position by a cord attached to a lug 48, ideally to overlap the patch which is to be cured, so that the operation can be completed in one cycle. This bag 70 is then inflated by the pressure of the hot gas, so displacing the cold water in the pipe 10 and ensuring the close contact of the bag 70 with the inside of liner 20. The hot gas is then recycled through the bag 70 until the desired temperature is achieved for the required time. When the exothermic reaction commences in the thermo-setting resin of the liner 20, a temperature measuring device (thermostat or thermocouple) may detect the increase in temperature, at which time the gas temperature may be reduced and the pressure gradually decreased, to permit the cold water to displace the volume previously occupied by the bag 70. This will reduce any tendency of the outside of the bag 70 to adhere to the inside of the liner 20 and will facilitate the removal of the bag 70 to the surface unit, or to relocate it to other patches or extensions of the patch for subsequent curing operations. The cold water will also act as a heat-sink to speed up the thermo-setting cure of the resin in the liner 20.

Because of the simplicity of this system, long bags 70 may be employed, so permitting the heat treatment of longer patches. Also it should be noted that it will not be necessary to have electrical power down the pipe 10, apart from the very low level associated with the connections to the heat-measuring devices and TV cameras that may be used.

Whilst the above system is intended primarily for use in patching smaller diameter piping, its use could be extended for the treatment of larger diameter pipes, where the distances from the surface unit are not too great and the patches involved are relatively small. Factors involved will include the distance from the surface unit, the capacity of the flexible tube 72 which will supply the hot gas and the thermal losses in the transmission of the gas from the surface unit to the bag 70, especially when passing through cold water in the pipe 10.

The perforated tube 76 can be rigid, semi-rigid or flexible, depending on the requirements. The outside of bag 70 can, as in the other embodiments, be coated with a layer of PTFE to reduce the risk of the bag 70 sticking to the liner 20.

The described examples illustrate the invention and many modifications can be made within the scope of the invention as defined in the claims. For example, the inflatable sleeve 52 or bag 70 can be made only of PTFE, also of heat-resistant sheets made of layered composites.

## Claims

1. A method of lining a pipe (10), which comprises : placing inside the pipe (10) a heat-curable thermosetting pipe liner (20) that thermosets at a temperature above 100°C, in particular from 110-160°C; applying the pipe liner (20) against the inside surface of the pipe (10); and curing at least one annular segment of the pipe liner (20) by a curing operation using a segment-by-segment liner curing unit (40) that is displaceable along the inside of the lined pipe (10,20) and is arranged for curing the pipe liner (20) of a long pipe one annular segment at a time by placing the curing unit (40) along the lined pipe (10,20) at a location corresponding to an annular segment of the pipe liner to be cured, and as needed displacing the curing unit (40) along the lined pipe (10,20) to different locations corresponding to different annular segments of the pipe liner to be cured, wherein
the curing unit (40) comprises:
an inflatable/deflatable enclosure (50) comprising an inflatable sleeve (52,70) that can be inflated by a pressurized fluid in the enclosure so as to press against the inside of an annular segment of the pipe liner (20) to be cured, and when deflated fits loose enough inside the pipe (10) to allow the unit (40) to be displaced along the inside of the pipe (10), the enclosure (50) being re-inflatable and deflatable as needed, and
means (62,72) for heating an annular segment of the liner (20) that is pressed by the pressurized fluid acting on the inflated sleeve (52,70), the heating means being arranged to generate heat in the enclosure (50) or to deliver hot pressurized fluid to the enclosure (50); and
the curing operation comprises:
placing the curing unit (40) at a location along the pipe (10) where an annular segment of the liner (20) is to be cured, inflating the enclosure (50) with pressurized fluid, heating the annular segment of the pipe liner (20) by generating heat in the enclosure (50) or by delivering hot pressurized fluid to the enclosure (50), whereby the inflated sleeve (52,70) presses against the annular segment of the liner (20) which is heated to its thermosetting temperature to cure the liner segment, deflating the enclosure (50) to allow the cured liner segment to be cooled by fluid in the pipe and to harden, displacing the curing unit (40) along the pipe (10), and repeating the operation as necessary.

2. The method of claim 1, wherein the heat-curable thermosetting pipe liner (20) thermosets at a temperature from 110-130°C.

3. The method of claim 1 or 2, wherein the pipe (10) contains pressurized fluid, in particular water, and the enclosure (50) is inflated with another pressurized fluid, in particular air, at a pressure which exceeds the pressure of fluid in the pipe (10) and which is sufficient to firmly press the inflated sleeve (52,70) against a liner segment.

4. The method of any preceding claim, wherein after curing a liner segment at a given location along the pipe (10), the curing unit (40) is displaced, the cured segment inspected by a remote-controlled TV unit and a further curing operation is carried out on the same liner segment if necessary.

5. A system for lining a pipe (10), which comprises : a heat-curable thermosetting pipe liner (20) that thermosets at a temperature above 100°C, in particular from 110-160°C; means for placing the pipe liner (20) inside the pipe (10) and applying the pipe liner (20) against the inside surface of the pipe (10); and a segment-by-segment liner curing unit (40) that is displaceable along the inside of the lined pipe (10,20) and is arranged for curing the pipe liner (20) of a long pipe one annular segment at a time by placing the curing unit (40) along the lined pipe (10,20) at a location corresponding to an annular segment of the pipe liner to be cured, and as needed displacing the curing unit (40) along the lined pipe (10,20) to different locations corresponding to different annular segments of the pipe liner to be cured, wherein
the curing unit comprises:
an inflatable/deflatable enclosure (50) comprising an inflatable sleeve (52,70) that can be inflated by a pressurized fluid in the enclosure so as to press against the inside of an annular segment of the pipe liner (20) to be cured, and when deflated fits loose enough inside the pipe (10) to allow the unit (40) to be displaced along the inside of the pipe (10), the enclosure (50) being re-inflatable and deflatable as needed, and
means (62,72) for heating an annular segment of the liner (20) that is pressed by the pressurized fluid acting on the inflated sleeve (52,70), the heating means being arranged to generate heat in the enclosure (50) or to deliver hot pressurized fluid to the enclosure (50); and
the system is operable to cure at least one segment of the pipe liner (20) by a curing operation that comprises:
placing the curing unit (40) at a location along the pipe (10) where an annular segment of the liner (20) is to be cured, inflating the enclosure (50) with pressurized fluid, heating the annular segment of the pipe liner (20) by generating heat in the enclosure (50) or by delivering hot pressurized fluid to the enclosure (50), whereby the inflated sleeve (52,70) presses against the annular segment of the liner (20) which is heated to its thermosetting temperature to cure the liner segment, deflating the enclosure (50) to allow the cured liner segment to be cooled by fluid in the pipe and to harden, displacing the curing unit (40) along the pipe (10), and repeating the operation as necessary.

6. The system of claim 5, wherein the heat-curable thermosetting pipe liner (20) thermosets at a temperature from 110-130°C.

7. The system of claim 5 or 6, wherein the inflatable sleeve (52,70) of the enclosure (50) is made of heat-resistant plastics material and coated on its outside surface that contacts the liner (20) with a low-friction plastics material such as PTFE.

8. The system of claim 5, 6 or 7, wherein the curing unit (40) comprises a cylindrical core with discs, rings or plates (44) at its ends on which the inflatable sleeve (52) is mounted.

9. The system of claim 5, 6 or 7, wherein the inflatable/deflatable enclosure is a tubular bag (70).

10. The system of any one of of claims 5 to 9, wherein the inflatable sleeve (52) is mounted on a cylindrical core (42) of the curing unit (40) that supports a heating unit (62), the cylindrical core in particular comprising an inner core (30,45) carrying an electrically-powered heating coil (62), and a grid (68) surrounding the heating coil, the inner core (30,45) optionally being hollow.

11. The system of any one of of claims 5 to 9, comprising a thermally insulated conduit (72) for delivering hot pressurized fluid, in particular air, to the enclosure (50,70), and an exhaust conduit (74) for recirculating the pressurized fluid from the enclosure (50,70).

12. The system of claim 11, wherein the inflatable/deflatable enclosure (50,70) contains an internal perforated tube (76) for distributing hot pressurized fluid along the enclosure (50,70).

13. A segment-by-segment liner curing unit (40) of a pipe lining system as claimed in any one of claims 5 to 12, the unit being displaceable along the inside of a lined pipe (10,20) of given diameter and arranged for curing the pipe liner (20) of a long pipe one annular segment at a time by placing the curing unit (40) along the lined pipe (10,20) at a location corresponding to an annular segment of the pipe liner to be cured, and as needed displacing the curing unit (40) along the lined pipe (10,20) to different locations corresponding to different annular segments of the pipe liner to be cured, the curing unit (40) comprising:
an inflatable/deflatable enclosure (50) comprising an inflatable sleeve (52,70) that can be inflated by a pressurized fluid in the enclosure so as to press against the inside of an annular segment of the pipe liner (20) to be cured, and when deflated fits loose enough inside the pipe (10) to allow the unit (40) to be displaced along the inside of the pipe (10), the enclosure being re-inflatable and deflatable as needed, and
means (62,72) for heating an annular segment of the liner (20) that is pressed by the pressurized fluid acting on the inflated sleeve (52,70), the heating means being arranged to generate heat in the enclosure (50) or to deliver hot pressurized fluid to the enclosure (50).
